# EUROPÄISCHE PATENTSCHRIFT

(11) **EP 1 828 642 B1**
(45) Veröffentlichungstag und Bekanntmachung des Hinweises auf die Patenterteilung: **17.11.2010**
(21) Anmeldenummer: 05818910.1
(22) Anmeldetag: 14.12.2005
(51) Int. Cl.: F16H 61/4157

(54) **HYDROSTATISCHER ANTRIEB MIT DREHZAHLBEGRENZUNG**
HYDROSTATIC DRIVE WITH SPEED LIMITATION
DISPOSITIF D'ENTRAINEMENT HYDROSTATIQUE A LIMITATION DE LA VITESSE DE ROTATION

(30) Priorität: 23.12.2004 DE 102004062388
(43) Veröffentlichungstag der Anmeldung: 05.09.2007
(73) Patentinhaber: Brueninghaus Hydromatik GmbH, 89275 Elchingen (DE)
(72) Erfinder: GEISSLER, Grit, 01277 Dresden (DE); VOGL, Karl-Heinz, 88444 Ummendorf (DE); SCHNIEDERJAN, Reinhold, 89223 Neu-Ulm (DE); GEPRÄGS, Markus, 89075 Ulm (DE)
(74) Vertreter: Körfer, Thomas
(86) Internationale Anmeldenummer: PCT/EP2005/013436
(87) Internationale Veröffentlichungsnummer: WO 2006/069631

(56) Entgegenhaltungen:
- DE-A1- 3 825 726
- DE-A1- 10 250 903
- US-A- 3 996 743
- US-A- 4 203 293
- US-A- 5 897 176
- US-B1- 6 360 537

## Beschreibung

Die Erfindung betrifft einen hydrostatischen Antrieb.

Bei hydrostatischen Antrieben, wie sie beispielsweise in mobilen Arbeitsmaschinen verwendet werden, wird meist eine in einem geschlossenen Kreislauf angeordnete Hydropumpe durch eine Antriebsmaschine angetrieben. Die Hydropumpe ist meist durch zwei Arbeitsleitungen mit einem Hydromotor verbunden. In bestimmten Fahrsituationen kann es vorkommen, dass der Hydromotor das Druckmittel in dem geschlossenen hydraulischen Kreislauf fördert. In diesem Fall arbeitet die Hydropumpe als Motor und wird durch das in sie hineingeförderte Druckmittel beaufschlagt. Wird dabei die der jeweiligen Drehzahl entsprechende Bremslast des Antriebsmotors überschritten, so kommt es zu einer Drehzahlerhöhung der Antriebsmaschine. Auf Seiten des hydraulischen Antriebs sind daher geeignete Maßnahmen zu ergreifen, um eine unzulässige Drehzahlerhöhung der Antriebsmaschine, die zu ihrer Zerstörung führen kann, zu verhindern.

Aus der DE 102 41 950 A1 ist es bekannt, in der stromabwärts des Hydromotors angeordneten Arbeitsleitung ein Drosselventil vorzusehen. Mit Hilfe dieses Ventils ist eine Drosselung des Volumenstroms in der Arbeitsleitung realisierbar. Das Drosselventil wird hierzu durch einen Stellkolben hinsichtlich seiner Position beeinflusst. Die Position des Stellkolbens ist wiederum von dem stromabwärts des Drosselventils angeordneten Arbeitsleitungsdruck sowie einem von der Drehzahl des Antriebsmotors abhängigen Druck abhängig.

Bei dem vorgeschlagenen Antrieb ist es von Nachteil, dass das gesamte Fördervolumen durch die Drosselstelle gefördert werden muss. Dabei werden erhebliche Temperaturen in dem Druckmittel erreicht. Ferner ist ein Nachteil, dass die Steuerung des geregelten Drosselventils einen erheblichen Aufwand erfordert. So ist neben dem Stellzylinder auch ein weiteres Stellventil erforderlich.

Die Patentschrift US 4,203,293 zeigt einen hydrostatischen Antrieb. Ein erster Schieber und ein zweiter Schieber eines Ventils werden von einer Druckdifferenz zwischen Mündungen einer ersten und einer zweiten Leitung in eine Druckleitung gesteuert. Das Ventil steuert ein zusätzliches Bremssystem und gibt an einen Steuerhebel ein Feedback über die Stärke eines Bremsens. Der hydrostatische Antrieb umfasst ferner einen Ventilblock, welches Druckbegrenzungsventile umfasst, welche die Funktion besitzen Arbeitsleitungen des Antriebs zu entlasten, indem sie aus den Arbeitsleitungen Druckmittel ablassen.

Der Erfindung liegt die Aufgabe zugrunde, einen hydrostatischen Antrieb zu schaffen, bei dem mit einfachen Mitteln eine Begrenzung der Drehzahlerhöhung der Antriebsmaschine möglich ist.

Die Aufgabe wird durch den erfindungsgemäßen hydrostatischen Antrieb mit den Merkmalen des Anspruchs 1 gelöst.

Bei dem erfindungsgemäßen hydrostatischen Antrieb wird genutzt, dass in einer Druckleitung, z. B. in einer Speisedruckleitung, eine Speisemenge fließt, die abhängig von der Drehzahl der Antriebsmaschine ist. Damit kann für diese Speisemenge in der Druckleitung ein Differenzdruckwert festgelegt werden, bei dessen Überschreitung Druckmittel aus der Arbeitsleitung entnommen wird. Die Entnahme von Druckmittel aus der Arbeitsleitung hat zur Folge, dass das von dem Hydromotor in die Arbeitsleitung geförderte Druckmittel nur noch zum Teil zurück zu der Hydropumpe gefördert wird. Damit wird der Druckmittelstrom durch die Hydropumpe so verringert, dass eine unzulässige Erhöhung der Drehzahl der Antriebsmaschine verhindert wird. Der hydrostatische Antrieb hat insbesondere den Vorteil, dass nur der vergleichsweise niedrige Druck in der Druckleitung zum Steuern verwendet wird. Dadurch wird die Sicherheit des Systems verbessert und die Kosten werden verringert.

Der erfindungsgemäße hydrostatische Antrieb umfasst eine mit einer entweder in eine erste Arbeitsleitung oder eine zweite Arbeitsleitung fördernden von einer Antriebsmaschine angetriebenen Hydropumpe, welche über die erste Arbeitsleitung und über die zweite Arbeitsleitung mit einem Hydromotor verbunden ist, und mit einer Druckleitung, in der eine Speisedruckdrossel angeordnet ist und eine von der Drehzahl der Antriebsmaschine abhängige Speisemenge fließt. Der erfindungsgemäße hydrostatische Antrieb zeichnet sich dadurch aus, dass bei Überschreiten eines Differenzdruckgrenzwerts an der Speisedruckdrossel in der Druckleitung als eine Ursache aus der ersten Arbeitsleitung, in die durch den in einem Schiebebetrieb als Pumpe betriebenen Hydromotor Druckmittel gefördert wird, als eine Wirkung das Druckmittel entnommen wird, so dass ein Druckmittelteilstrom in Richtung der Hydropumpe weitergefördert wird.

In den Unteransprüchen sind vorteilhafte Weiterbildungen des erfindungsgemäßen hydrostatischen Antriebs ausgeführt. Insbesondere ist es vorteilhaft, den drehzahlabhängigen Druck mittels einer Speisepumpe zu erzeugen, die ihrerseits über die Antriebsmaschine gemeinsam mit der Hydropumpe angetrieben wird. Da die Speisepumpe in der Regel als Konstantpumpe ausgeführt ist, entspricht die von ihr geförderte Speisemenge jeweils einer Drehzahl des Antriebsmotors.

Außerdem ist es vorteilhaft, ein Hochdruckbegrenzungsventil, welches zum Begrenzen des maximalen zulässigen Arbeitsdruck in der Arbeitsleitung ohnehin erforderlich ist, zu verwenden, um eine Entnahme von Druckmittel aus der Arbeitsleitung zu ermöglichen. Das Hochdruckbegrenzungsventil wird hierzu abhängig von dem jeweils in der Arbeitsleitung herrschenden Druck bei Überschreiten des Grenzwerts in der Druckleitung geöffnet, so dass aus der Arbeitsleitung über das Hochdruckbegrenzungsventil Druckmittel entnommen werden kann.

Besonders einfach lässt sich ein gegen Überdrehen gesicherter hydrostatischer Antrieb realisieren, indem das Hochdruckbegrenzungsventil unmittelbar aus der Druckleitung über ein Differenzdruckregelventil angesteuert wird. Das Differenzdruckregelventil erkennt ein Ansteigen der Speisemenge in der Druckleitung und gibt eine durchströmbare Verbindung in Richtung des Hochdruckbegrenzungsventils frei. Der Druck in der Druckleitung wirkt daraufhin auf eine Messfläche des Hochdruckbegrenzungsventils und öffnet das Hochdruckbegrenzungsventil. Damit wird aus der Arbeitsleitung eine durchströmbare Verbindung zum Beispiel in Richtung des Tankvolumens geöffnet.

Weiterhin ist es besonders vorteilhaft, wenn die erste Arbeitsleitung Teil eines geschlossenen hydraulischen Kreislaufs ist, in dem die Hydropumpe über zwei Arbeitsleitungen mit einem Hydromotor verbunden ist. In einem solchen Fall kann eine Absicherung gegen überhöhte Drehzahlen der Antriebsmaschine sowohl für eine Vorwärtsfahrt als auch für eine Rückwärtsfahrt in einfacher Weise realisiert werden. Hierzu ist jeder der beiden Arbeitsleitungen ein Hochdruckbegrenzungsventil zugeordnet, wobei die beiden Hochdruckbegrenzungsventile entweder einzeln, dann in Abhängigkeit von der jeweiligen Fahrtrichtung, oder aber gemeinsam bei Überschreiten des Drucks in der Druckleitung geöffnet werden.

Weiterhin ist es vorteilhaft, wenn die beiden Hochdruckbegrenzungsventile jeweils Teil einer Speiseventileinheit der ersten Arbeitsleitung bzw. Speiseventileinheit der zweiten Arbeitsleitung sind, so dass durch das geöffnete Hochdruckbegrenzungsventil der einen und die Speiseventileinheit der anderen Arbeitsleitung ein kurzgeschlossener hydraulischer Kreislauf entsteht. Auf diese Weise werden zwei hydraulische Kreisläufe ausgebildet, von denen lediglich einer durch die Hydropumpe führt. Der so aufgeteilte Druckmittelstrom führt dann nicht zu einer unzulässigen Drehzahlerhöhung seitens der Antriebsmaschine.

Ein bevorzugtes Ausführungsbeispiel des erfindungsgemäßen hydrostatischen Antriebs ist in der Zeichnung dargestellt und wird anhand der nachfolgenden Beschreibung erläutert. Es zeigen:
- Fig. 1: ein erstes Ausführungsbeispiel für einen erfindungsgemäßen hydrostatischen Antrieb und
- Fig. 2: ein zweites Ausführungsbeispiel für einen erfindungsgemäßen hydrostatischen Antrieb.

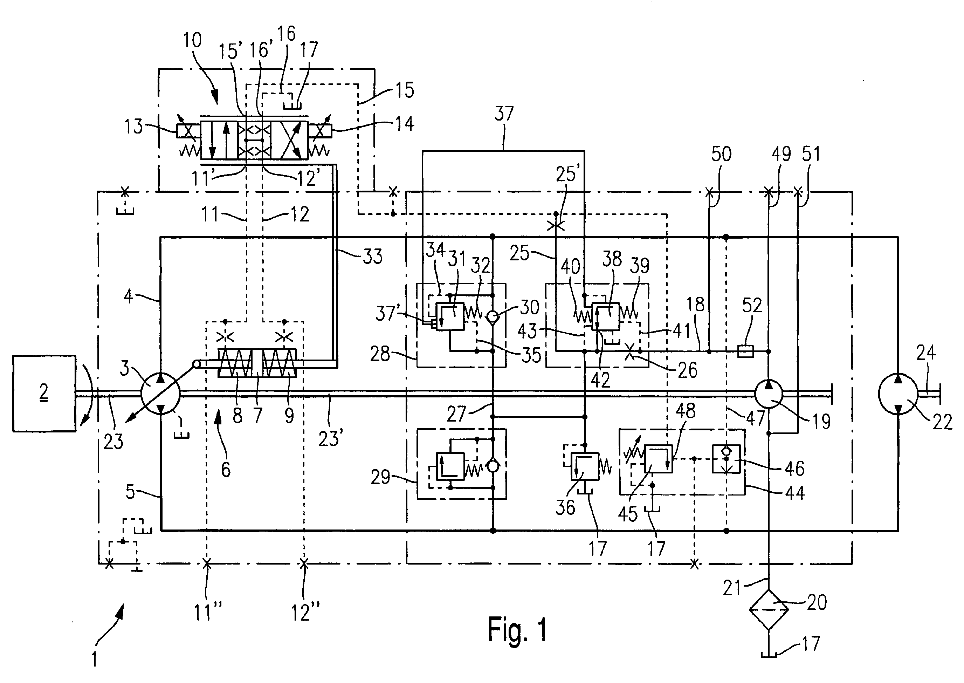

In der Fig. 1 ist ein erstes Ausführungsbeispiel eines erfindungsgemäßen hydrostatischen Antriebs 1 gezeigt. Der hydrostatische Antrieb weist eine Antriebsmaschine 2 auf. Die Antriebsmaschine 2 ist vorzugsweise ein Dieselmotor. Die Antriebsmaschine 2 treibt eine Hydropumpe 3 an. Die Hydropumpe 3 ist vorzugsweise eine in zwei Richtungen verschwenkbare hydrostatische Axialkolbenmaschine. Zum Antreiben der Hydropumpe 3 ist die Hydropumpe 3 mit der Antriebsmaschine 2 über eine Antriebswelle 23 verbunden.

Die Hydropumpe 3 ist in ihrem Fördervolumen einstellbar und kann entweder in eine erste Arbeitsleitung 4 oder in eine zweite Arbeitsleitung 5 fördern. Das von der Hydropumpe 3 geförderte Druckmittel treibt einen Hydromotor 22 an, der über eine Antriebswelle 24 das Fahrzeug antreibt. Zum Einstellen der Hydropumpe 3 hinsichtlich Förderrichtung und Fördervolumen ist eine Verstellvorrichtung 6 vorgesehen. Die Verstellvorrichtung 6 weist einen Stellzylinder auf, in dem ein Stellkoben 7 angeordnet ist. Der Stellkolben 7 teilt den Stellzylinder in eine erste Stelldruckkammer 8 und eine zweite Stelldruckkammer 9.

Der Stellkolben 7 wird durch den jeweils in der ersten Stelldruckkammer 8 bzw. der zweiten Stelldruckkammer 9 herrschenden Stelldruck mit einer hydraulischen Kraft beaufschlagt. Zusätzlich sind in der ersten Stelldruckkammer 8 sowie in der zweiten Stelldruckkammer 9 jeweils eine Zentrierfeder angeordnet, die bei einem Druckgleichgewicht in der ersten Stelldruckkammer 8 und der zweiten Stelldruckkammer 9 den Stellkolben 7 in eine mittlere Position zurückstellen. In dieser mittleren Position ist die Hydropumpe 3, deren Verstellmechanismus mit dem Stellkolben 7 gekoppelt ist, auf ein Nullfördervolumen gestellt.

Zum Einstellen des Drucks in der ersten Stelldruckkammer 8 bzw. der zweiten Stelldruckkammer 9 dient ein Stelldruckregelventil 10. Das Stelldruckregelventil 10 ist mit zwei Anschlüssen 11', 12' über eine erste Stelldruckleitung 11 mit der ersten Stelldruckkammer 8 bzw. über eine zweite Stelldruckleitung 12 mit der zweiten Stelldruckkammer 9 verbunden.

Das Stelldruckregelventil 10 selbst ist durch einen ersten Elektromagneten 13 bzw. einen zweiten Elektromagneten 14 hinsichtlich seiner Position verstellbar. In der Figur 1 ist das Stelldruckregelventil 10 in seiner Neutralstellung dargestellt. In der Neutralstellung des Stelldruckregelventils 10 sind sowohl die erste Stelldruckleitung 11 als auch die zweite Stelldruckleitung 12 jeweils gedrosselt mit einer Stelldruckversorgungsleitung 15 sowie einer Entspannungsleitung 16 verbunden.

Über die Stelldruckversorgungsleitung 15 liegt an einem Eingang 15' des Stelldruckregelventils 10 der maximal mögliche Stelldruck an. Ein Ausgang 16' des Stelldruckregelventils 10 ist über eine Entspannungsleitung 16 mit einem Tankvolumen 17 verbunden. Aus der bereits beschriebenen Mittelposition des Stelldruckregelventils 10, in der alle vier Anschlüsse des Stelldruckregelventils 10 miteinander gedrosselt verbunden sind, kann durch Anlegen eines Steuerstroms an dem ersten Elektromagneten 13 bzw. dem zweiten Elektromagneten 14 das Stelldruckregelventil 10 aus seiner neutralen Position heraus ausgelenkt werden. Wird beispielsweise der erste Elektromagnet 13 bestromt, so wird das Stelldruckregelventil 10 in Richtung seiner ersten Endposition ausgelenkt.

In der ersten Endposition des Stelldruckregelventils 10 ist die Stelldruckversorgungsleitung 15 mit der ersten Stelldruckleitung 11 verbunden, so dass der Stellkolben 7 mit seiner in Richtung der ersten Stelldruckkammer 8 gewandten Seite mit dem in der Stelldruckversorgungsleitung 15 herrschenden Druck beaufschlagt wird. Gleichzeitig wird die zweite Stelldruckleitung 12 über die Entspannungsleitung 16 mit dem Tankvolumen 17 verbunden. Dadurch ergeben sich in der ersten Stelldruckkammer 8 und der zweiten Stelldruckkammer 9 unterschiedliche Stelldrücke, infolgedessen der Stellkolben 7 in der Fig. 1 nach rechts verschoben wird.

Umgekehrt kann auch an dem zweiten Elektromagneten 14 ein Stellsignal angelegt werden, so dass der zweite Elektromagnet 14 das Stelldruckregelventil 10 in Richtung seiner zweiten Endposition auslenkt. In der zweiten Endposition des Stelldruckregelventils 14 wird die Stelldruckleitung 15 mit der zweiten Stelldruckleitung 12 und die Entspannungsleitung 16 mit der ersten Stelldruckleitung 11 verbunden. Dementsprechend wird nun die zweite Stelldruckkammer 9 bedrückt, während die erste Stelldruckkammer 8 in Richtung des Tankvolumens 17 entspannt wird. Eine Stellbewegung des Stellkolbens 7 in der Fig. 1 nach links ist die Folge.

Liegen sowohl an dem ersten Elektromagneten 13 wie auch dem zweiten Elektromagneten 14 keine Stellsignale an, so wird das Stelldruckregelventil 10 ausschließlich mit der Kraft zweier Zentrierfedern beaufschlagt, die das Stelldruckregelventil 10 in Richtung seiner Ruheposition zurückstellen. In der Ruheposition sind erneut alle vier Anschlüsse des Stelldruckregelventils 10 miteinander verbunden, sodass sich der Druck in der ersten Stelldruckkammer 8 sowie der zweiten Stelldruckkammer 9 aneinander angleichen. Die in den Stelldruckkammern 8,9 angeordneten Federn bringen den Stellkolben 7 ebenfalls zurück in seine mittlere Position. Die Stellbewegung des Stellkolbens 7 wird über eine Koppelstange 33 auf das Stelldrückregelventil 10 rückgekoppelt.

Um eine zu schnelle Stellbewegung des Stellkolbens 7 zu verhindern, sind in der ersten Stelldruckleitung 11 und der zweiten Stelldruckleitung 12 zwischen dem Stelldruckregelventil 10 und der Verstellvorrichtung 6 jeweils Drosseln angeordnet. Zur Überwachung der jeweils die Stellkammern 8 bzw. 9 beaufschlagenden Stelldrücke sind von den Stelldruckleitungen 11,12 jeweils ein Stelldruckmessanschluss 11" bzw. 12" nach außen geführt.

Mit Hilfe der beiden Elektromagneten 13,14 kann das Stelldruckregelventil 10 in jede beliebige zwischen den beiden Endpositionen liegende Position gebracht werden. Den Stelldruckkammern 8 bzw. 9 kann somit ein lediglich reduzierter Stelldruck zugeführt werden. Eine Obergrenze für den verstellbaren Stelldruck bildet der in der Stelldruckversorgungsleitung 15 herrschende Druck. Um die Stelldruckversorgungsleitung 15 mit einem Druck zu beaufschlagen, ist die Stelldruckleitung 15 mit einer Speisedruckleitung 18 verbunden. In einer Stelldruckverbindungsleitung 25 der Speisedruckleitung 18 mit der Stelldruckversorgungsleitung 15 ist eine Stelldruckdrossel 25' angeordnet.

Zum Bedrücken der Speisedruckleitung 18 ist eine Speisepumpe 19 vorgesehen, die über einen Filter 20 und eine Saugleitung 21 aus dem Tankvolumen 17 Druckmittel ansaugt und in die Speisedruckleitung 18 fördert. Die Speisepumpe 19 ist dabei vorzugsweise über einen Antriebswellenabschnitt 23' durch die Antriebsmaschine 2 angetrieben. Die Speisepumpe 19 ist zur Förderung in lediglich einer Richtung vorgesehen und vorzugsweise als Konstantpumpe ausgebildet. Der von der Speisepumpe 19 geförderte Speisemenge ist damit unmittelbar abhängig von der Drehzahl der Antriebsmaschine 2.

Solange der hydraulische Arbeitskreislauf aus den beiden Arbeitsleitungen 4, 5 drucklos ist, fördert die Speisepumpe 19 in den Arbeitskreis Druckmittel. Die Speisedruckleitung 18 ist hierzu einerseits mit der Förderseite der Speisepumpe 19 und andererseits mit einer ersten Verbindungsleitung 27 verbunden. Die erste Verbindungsleitung 27 verbindet die erste Arbeitsleitung 4 mit der zweiten Arbeitsleitung 5.

Zwischen der ersten Arbeitsleitung 4 und der Ausmündung der Speisedruckleitung 18 in die erste Verbindungsleitung 27 ist eine erste Speiseventileinheit 28 angeordnet. Ebenso ist zwischen der zweiten Arbeitsleitung 5 und der Ausmündung der Speisedruckleitung 18 in die erste Verbindungsleitung 27 eine zweite Speiseventileinheit 29 angeordnet. Die erste Speiseventileinheit 28 weist ein Rückschlagventil 30 und ein parallel dazu angeordnetes Hochdruckbegrenzungsventil 31 auf. Das Rückschlagventil 30 ist so orientiert, dass es in Richtung zu der ersten Arbeitsleitung 4 hin öffnet. Damit kann die Speisepumpe 19 über die Speisedruckleitung 18 und die erste Verbindungsleitung 27 die erste Arbeitsleitung 4 so lange bedrücken, wie in der Speisedruckleitung 18 ein höherer Druck herrscht als in der ersten Arbeitsleitung 4. Übersteigt jedoch der in der ersten Arbeitsleitung 4 herrschende Druck den Druck der Speisedruckleitung 18, so schließt das Rückschlagventil 30.

Um ein Auftreten kritischer Drücke in der ersten Arbeitsleitung 4 zu verhindern, öffnet oberhalb kritischer Druckwerte das Hochdruckbegrenzungsventil 31, so dass aus der ersten Arbeitsleitung 4 Druckmittel abfließen kann. Das Hochdruckbegrenzungsventil 31 ist hierzu mit einer ersten Einstellfeder 32 mit einer Kraft beaufschlagt. In entgegengesetzter Richtung wirkt auf das Hochdruckbegrenzungsventil 31 an einer Druckmessfläche der dieser Druckmessfläche über eine erste Umgehungsleitung 34 zugeführte Druck der ersten Arbeitsleitung 4.

In der dargestellten Ausführungsform ist das Hochdruckbegrenzungsventil 31 als Differenzdruckventil ausgebildet. Gleichsinnig zu der Kraft der ersten Einstellfeder 32 wirkt auf eine weitere Druckmessfläche des Hochdruckbegrenzungsventils 31 die hydraulische Kraft des in der Verbindungsleitung 27 bzw. der Speisedruckleitung 18 herrschenden Drucks. Die erste Verbindungsleitung 27 ist hierzu über eine zweite Umgehungsleitung 35 mit der weiteren Messfläche des Hochdruckbegrenzungsventils 31 verbunden.

Entsprechend dem bisher beschriebenen Aufbau der ersten Speiseventileinheit 28 ist auch die zweite Speiseventileinheit 29 aufgebaut. Das bedeutet, dass bei Ansteigen des Drucks in der ersten Arbeitsleitung 4 über einen kritischen Wert das Hochdruckbegrenzungsventil 31 der ersten Speiseventileinheit 28 öffnet und so die erste Arbeitsleitung 4 in Richtung der Speisedruckleitung 18 entlastet. Liegt der Druck in der zweiten Arbeitsleitung 5 unterhalb des Druckniveaus der Speisedruckleitung 18, so öffnet das Rückschlagventil der zweiten Speiseventileinheit 29 und das über die erste Speiseventileinheit 28 der ersten Arbeitsleitung 4 entnommene Druckmittel fließt über die zweite Speiseventileinheit 29 in die zweite Arbeitsleitung 5 ab. Ist jedoch auch in der zweiten Arbeitsleitung 5 ein höherer Druck als in der Speisedruckleitung 18, so ist zur Absicherung der Speisedruckleitung 18 ein Speisedruckbegrenzungsventil 36 vorgesehen.

Das Speisedruckbegrenzungsventil 36 ist ebenfalls ein federbelastetes Druckbegrenzungsventil. Entgegen der Kraft der Feder wirkt auf das Speisedruckbegrenzungsventil 36 der in der Speisedruckleitung 18 herrschende Speisedruck. Übersteigt der Speisedruck einen kritischen Wert, beispielsweise 25 bar, so wird das Speisedruckbegrenzungsventil 36 in Richtung seiner geöffneten Position gestellt. In seiner geöffneten Position verbindet das Speisedruckbegrenzungsventil 36 die Speisedruckleitung 18 mit dem Tankvolumen 17.

Wird die erste Arbeitsleitung 4 durch die erste Speiseventileinheit 28 bzw. dessen Hochdruckbegrenzungsventil 31 aufgrund kritischer Drücke entlastet und das entnommene Druckmittel in die Speisedruckleitung 18 abgeführt, so wird ein Druckanstieg über einen Grenzwert hinaus in der Speisedruckleitung 18 verhindert, indem ein Druckanstieg über beispielsweise 25 bar das Öffnen des Speisebegrenzungsventils 36 auslöst. Dementsprechend wird das aus der ersten Arbeitsleitung 4 entnommenes Druckmittel über die Verbindungsleitung 27 und die Speisedruckleitung 18 sowie das Speisedruckbegrenzungsventil 36 in das Tankvolumen 17 entspannt.

Auch abhängig von dem in der ersten Arbeitsleitung 4 und in einer dritten Meßleitung 37 herrschenden Druck kann das Hochdruckbegrenzungsventil 31 in seine geöffnete Stellung gebracht werden, in der eine durchströmbare Verbindung aus der ersten Arbeitsleitung 4 in Richtung der Speisedruckleitung 18 möglich ist. Das Hochdruckbegrenzungsventil 31 weist hierzu eine Steuerdruckmessfläche 37' auf, an der eine entgegen der Kraft der ersten Einstellfeder 32 wirkende hydraulische Kraft auf das Hochdruckbegrenzungsventil 31 erzeugbar ist. Die Steuerdruckmessfläche 37' des Hochdruckbegrenzungsventils 31 kann hierzu über die dritte Messleitung 37 mit einem Steuerdruck beaufschlagt werden. An dem von dem Hochdruckbegrenzungsventil 31 abgewandten Ende der dritten Messleitung 37 ist der Ausgang eines Differenzdruckregelventils 38 angeschlossen.

Das Differenzdruckventil 38 wird durch eine erste Feder 39 in Richtung seiner Ruheposition mit einer Kraft beaufschlagt. In entgegengesetzter Richtung wirkt auf das Differenzdruckventil 38 die Kraft einer zweiten Feder 40. Gleichsinnig mit der Kraft der ersten Feder 39 greift in Richtung der Ruheposition des Differenzdruckventils 38 eine hydraulische Kraft an einer Förderdruckmessfläche an. Die Förderdruckmessfläche ist über eine Förderdruckmessleitung 41 mit der Speisedruckleitung 18 verbunden. Über die Förderdruckmessleitung 41 wirkt der an dem förderseitigen Ausgang der Speisepumpe 19 herrschende Druck. Stromabwärts des Abzweigs zur Förderdruckmessleitung 41 ist in der Speisedruckleitung 18 eine Speisedruckdrossel 26 ausgebildet. Stromabwärts der Speisedruckdrossel 26 ist ein Speisedruckeingang 42 des Differenzdruckventils 38 mit der Speisedruckleitung 18 verbunden. Ebenfalls stromabwärts der Speisedruckdrossel 26 zweigt von der Speisedruckleitung 18 eine Speisedruckmessleitung 43 ab, die gleichsinnig mit der zweiten Feder 40 das Differenzdruckventil 38 an einer weiteren Messfläche mit dem stromabwärts der Speisedruckdrossel 26 in der Speisedruckleitung 18 herrschenden Speisedruck beaufschlagt.

Vermindert sich die Drehzahl der Antriebsmaschine 2 und damit die Drehzahl der Speisepumpe 19, so sinkt der Volumenstrom durch die Speisedruckdrossel 26 ab. Infolgedessen gleichen sich die über die Förderdruckmeßleitung 41 bzw. die Speisedruckmeßleitung 43 den jeweiligen Meßflächen an dem Differenzdruckventil 38 zugeführten Drücke an. Die resultierenden hydraulischen Kräfte auf das Differenzdruckventil 38 sind abhängig von der Größe der jeweils beaufschlagten Meßfläche. Damit kann über eine geeignete Auswahl der -Flächenverhältnisse zueinander eingestellt werden, bei welcher Speisemenge das Differenzdruckventil 38 öffnet.

Die von der Speisepumpe 19 erzeugte Speisemenge entspricht einer bestimmten Drehzahl der Antriebsmaschine 2, mit der die Speisepumpe 19 mechanisch fest gekoppelt ist. Wird der so festgelegte Differenzdruckgrenzwert erreicht, so wird das Differenzdruckventil 38 betätigt und verbindet zunehmend den Speisedruckeingang 42 mit der dritten Messleitung 37.

Damit wird über die dritte Messleitung 37 das Hochdruckbegrenzungsventil 31 mit einer hydraulischen Kraft beaufschlagt, die entgegengesetzt zu der Kraft der ersten Einstellfeder 32 wirkt. Das heißt, das Hochdruckbegrenzungsventil 31 wird abhängig von dem in der ersten Arbeitsleitung 4 herrschenden Arbeitsdruck und abhängig vom Druck in der dritten Meßleitung 37, der drehzahlabhängig ist, geöffnet. Das Öffnen des Hochdruckbegrenzungsventils 31 ermöglicht dann, dass aus der ersten Arbeitsleitung 4 Druckmittel entnommen wird. Der von dem im Schiebebetrieb als Pumpe betriebenen Hydromotor 22 in die erste Arbeitsleitung 4 geförderte Druckmittelstrom wird somit aufgeteilt in einen ersten Teilstrom, der in Richtung der Hydropumpe 3 weitergefördert wird und einen zweiten Teilstrom, der über das Hochdruckbegrenzungsventil 31 abgeführt wird. Der über das Hochdruckbegrenzungsventil 31 abgeführte Volumenstrom kann in bereits beschriebener Weise über das Rückschlagventil der zweiten Speiseventileinheit 29 in Richtung der zweiten Arbeitsleitung 5 abströmen, so dass über das Hochdruckbegrenzungsventil 31 und die zweite Speiseventileinheit 29 ein hydraulischer Kurzschluss der Arbeitsleitungen 4 und 5 erzeugt wird. Die Antriebsmaschine 2 wird dann nur noch durch das niedrigere Moment getrieben, das aus dem reduzierten Druck in der Arbeitsleitung reduziert. Die Antriebsmaschine 2 wird nicht überdreht.

Solange die Drehzahlen der Antriebsmaschine 2 in einem nicht kritischen Bereich liegen und dementsprechend die Speisemenge der Speisepumpe 19 an der Speisedruckdrossel 26 keinen Differenzdruck erzeugt, der oberhalb des Differenzdruckgrenzwerts liegt, bleibt das Differenzdruckventil 38 ohne Funktion. Das Hochdruckbegrenzungsventil 31 hat dann lediglich die Aufgabe, die erste Arbeitsleitung 4 abzusichern.

Um eine ausgeschwenkte Hydropumpe 3 zurückzuschwenken, wenn in einer der Arbeitsleitungen 4 bzw. 5 ein kritischer Druck festgestellt wird, ist zusätzlich eine Druckabschneidungsventileinheit 44 vorgesehen.

Mittels der Druckabschneidungsventileinheit 44 kann die Stelldruckversorgungsleitung 15 mit dem Tankvolumen 17 verbunden werden, so dass die Stelldruckversorgungsleitung 15 in Richtung des Tankvolumens 17 entspannt wird. Infolgedessen steht kein Stelldruck mehr in einer der Stelldruckkammern 8, 9 zur Verfügung und beide Stelldruckkammern 8 und 9 liegen auf dem selben niedrigen Druckniveau. Der Stellkolben 7 wird dann durch die Druckfedern zentriert und die Hydropumpe 3 in Richtung verschwindenden Fördervolumens verstellt.

Die Druckabschneidungsventileinheit 44 weist hierzu ein Druckabschneidungsventil 45 auf, über das die Stelldruckversorgungsleitung 15 mit dem Tankvolumen 17 verbindbar ist. In seiner Ruheposition wird das Druckabschneidungsventil 45 durch eine einstellbare Druckfeder in einer geschlossenen Position gehalten, in der eine durchströmbare Verbindung zwischen der Stelldruckversorgungsleitung 15 und dem Tankvolumen 17 nicht existiert. Entgegen der Kraft der einstellbaren Feder ist das Druckabschneidungsventil 45 mit einem Arbeitsleitungsdruck beaufschlagbar. Der Arbeitsleitungsdruck wird dem Druckabschneiungsventil 45 über ein Wechselventil 46 zugeführt. Das Wechselventil 46 verbindet mit dem entsprechenden Messanschluss des Druckabschneidungsventils 45 jeweils diejenige Arbeitsleitung 4 oder 5, in der der höhere Druck herrscht. Hierzu ist das Wechselventil 46 in einer zweiten Verbindungsleitung 47 angeordnet. Der Ausgang des Wechselventils 46 ist mit dem Messanschluss des Druckabschneidungsventils 45 verbunden.

Für den Fall, dass das in der Saugleitung 21 angeordnete Filter 20 nicht ausreichend ist, ist eine Filtereingangsleitung 49 vorgesehen. Die Filtereingangsleitung 49 wird durch die Speisepumpe 19 mit Druckmittel versorgt, wobei an die Filtereingangsleitung 49 ein weiteres Filter angeschlossen werden kann, dessen Ausgang mit der Filterausgangsleitung 50 verbunden ist. Damit das von der Speisepumpe 19 geförderte Druckmittel auch tatsächlich durch das zusätzliche Filter strömt, ist in dem Fall eines zusätzlichen Filters ein Stopfen 52 in der Speisedruckleitung 18 vorgesehen. Als weitere Sicherungsmöglichkeit für den Fall eines verstopften zusätzlichen Filters ist eine Druckentlastungsleitung 51 vorgesehen, die mit dem zusätzlichen Filter auf dessen Eingangsseite verbunden werden kann, sofern das Druckgefälle über das Filter einen kritischen Wert übersteigt. Die Druckentlastungsleitung 51 ist mit der Saugseite der Speisepumpe 19 verbunden.

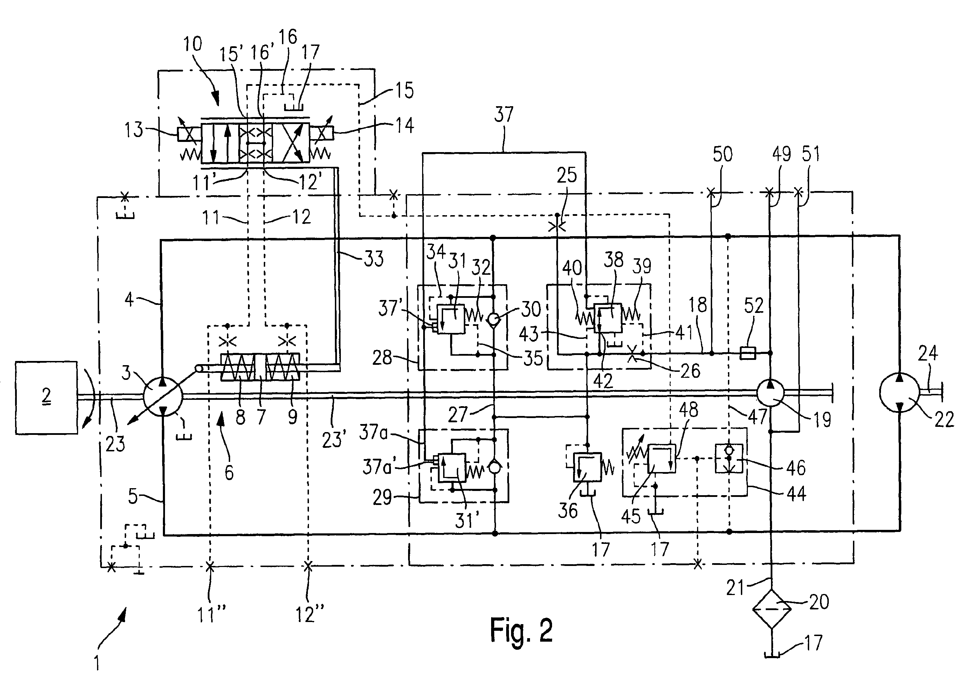

Das in der Fig. 2 dargestellte Ausführungsbeispiel unterscheidet sich von dem Ausführungsbeispiel der Fig. 1 darin, dass nicht nur die erste Speiseventileinheit 28 ein Hochdruckbegrenzungsventil 31 aufweist, welches abhängig von dem in der ersten Arbeitsleitung 4 herrschenden Druck aufgesteuert werden kann, sondern das auch die zweite Speiseventileinheit 29 ein entsprechendes Hochdruckbegrenzungsventil 31' aufweist. Auch das entsprechende Hochdruckbegrenzungsventil 31' kann abhängig von dem in der zweiten Arbeitsleitung 5 herrschenden Druck geöffnet werden, so dass eine Entnahme von Druckmittel aus der zweiten Arbeitsdruckleitung 5 vorgenommen werden kann.

Die zweite Speiseventileinheit 29 ist damit identisch mit der ersten Speiseventileinheit 28 aufgebaut. Sowohl dem Hochdruckbegrenzungsventil 31 wie auch dem entsprechenden Hochdruckbegrenzungsventil 31' der zweiten Speiseventileinheit wird über die dritte Messleitung 37 in Abhängigkeit von der Drehzahl der Antriebsmaschine 2 ein Druck zugeführt. Einer Steuerdruckmessfläche 37a' des entsprechenden Hochdruckbegrenzungsventils 31' der zweiten Speiseventileinheit 29 wird der Druck über einen Abschnitt 37a der dritten Druckmessleitung 37 zugeführt. Der Abschnitt 37a der dritten Messleitung 37 führt hierzu von einem Anschluss bei dem Hochdruckbegrenzungsventil 31 zu der entsprechenden Steuerdruckmessfläche 37a' des entsprechenden Hochdruckbegrenzungsventils 31'. Im Gegensatz zu dem Ausführungsbeispiel der Fig. 1 ist der Schutz der Antriebsmaschine 2 damit für beide Fahrtrichtungen gegeben.

Zum Schutz der Antriebsmaschine 2 vor Auftreten zu hoher Drehzahlen ist ein gleichzeitiges Ansteuern des Hochdruckbegrenzungsventils 31 sowie des entsprechenden Hochdruckbegrenzungsventils 31' der zweiten Speiseventileinheit 29 ausreichend. Da in jedem Fall über entweder die erste Speiseventileinheit 28 bzw. die zweite Speiseventileinheit 29 der stromabwärts des Hydromotors 22 gelegenen Arbeitleitung 4 bzw. 5 Druckmittel entnommen wird, ist immer sichergestellt, dass eine Aufteilung des Volumenstroms in eine durch die Hydropumpe 3 und einen entnommenen Teil erfolgt. Zur Sicherung der Antriebsmaschine 2 gegen überhöhte Drehzahl ist es daher irrelevant, ob die jeweils andere Speiseventileinheit ebenfalls geöffnet ist.

Soll dagegen in Abhängigkeit von der Fahrtrichtung nur jeweils das Hochdruckbegrenzungsventil 31 bzw. 31' geöffnet werden, welches der stromabwärts des Hydromotors 22 gelegenen Arbeitsleitung zugeordnet ist, so kann ein Ventil vorgesehen werden, das den in der dritten Messleitung 37 herrschenden Druck entweder dem Hochdruckbegrenzungsventil 31 oder dem entsprechenden Hochdruckbegrenzungsventil 31' zuführt. Dieses Ventil ist beispielsweise ein 3/2-Wegeventil, das zwischen den beiden Schaltstellungen in Abhängigkeit von der Fahrtrichtung und/oder dem Druckgradienten zwischen den beiden Arbeitsleitungen 4 und 5 verstellt wird.

Die Erfindung ist nicht auf die dargestellten Ausführungsbeispiele beschränkt. Vielmehr ist eine Kombination sämtlicher Merkmale der Ausführungsbeispiele untereinander möglich.

Anstelle der in den Ausführungsbeispielen beschriebenen Entnahme von Druckmittel mittels Hochdruckbegrenzungsventilen kann die Entnahme des Druckmittels aus der Arbeitsleitung 4 bzw. 5 auch mit Hilfe eines Drosselventils oder eines Stromreglers erfolgen. Zum Ansteuern sind der Stromleger bzw. das Drosselventil dann entsprechend mit der dritten Meßleitung 37 verbunden.

## Patentansprüche

1. Hydrostatischer Antrieb mit einer entweder in eine erste Arbeitsleitung (4) oder eine zweite Arbeitsleitung (5) fördernden von einer Antriebsmaschine (2) angetriebenen Hydropumpe (3), welche über die erste Arbeitsleitung (4) und über die zweite Arbeitsleitung (5) mit einem Hydromotor (22) verbunden ist, und mit einer Druckleitung (18), in der eine Speisedruckdrossel (26) angeordnet ist und eine von der Drehzahl der Antriebsmaschine (2) abhängige Speisemenge fließt,
**dadurch gekennzeichnet,**
**dass** bei Überschreiten eines Differenzdruckgrenzwerts an der Speisedruckdrossel (26) in der Druckleitung (18) als eine Ursache aus der ersten Arbeitsleitung (4), in die durch den in einem Schiebebetrieb als Pumpe betriebenen Hydromotor Druckmittel gefördert wird, als eine Wirkung das Druckmittel entnommen wird, so dass ein Druckmittelteilstrom in Richtung der Hydropumpe (3) weitergefördert wird.

2. Hydrostatischer Antrieb nach Anspruch 1,
**dadurch gekennzeichnet,**
**dass** zum Erzeugen einer drehzahlabhängigen Speisemenge die Druckleitung (18) mit einer von der Antriebsmaschine (2) angetriebenen Speisepumpe (19) verbunden ist.

3. Hydrostatischer Antrieb nach Anspruch 1,
**dadurch gekennzeichnet,**
**dass** zur Entnahme von Druckmittel aus der ersten Arbeitsleitung (4) ein die erste Arbeitsleitung (4) gegen überhöhte Arbeitsdrücke sicherndes Hochdruckbegrenzungsventil (31) in eine geöffnete Stellung bringbar ist.

4. Hydrostatischer Antrieb nach einem der Ansprüche 1 bis 3,
**dadurch gekennzeichnet,**
**dass** zum Öffnen des Hochdruckbegrenzungsventils (31) das Hochdruckbegrenzungsventil (31) mittels eines Differenzdruckventils (38) mit der Druckleitung (18) verbindbar ist.

5. Hydrostatischer Antrieb nach Anspruch 4,
**dadurch gekennzeichnet,**
**dass** die erste Arbeitsleitung (4) und die zweite Arbeitsleitung (5) durch das Hochdruckbegrenzungsventil (31) bzw. durch ein entsprechendes Hochdruckventil (31') für die zweite Arbeitsleitung (5) gegen Überdruck gesichert sind.

6. Hydrostatischer Antrieb nach Anspruch 5,
**dadurch gekennzeichnet,**
**dass** das Hochdruckbegrenzungsventil (31) bzw. das entsprechende Hochdruckbegrenzungsventil (31') bei Überschreiten eines Differenzdruckgrenzwerts an der Speisedruckdrossel (26) in der Druckleitung (18) in eine geöffnete Position bringbar sind.

7. Hydrostatischer Antrieb nach Anspruch 1,
**dadurch gekennzeichnet,**
**dass** zur Entnahme von Druckmittel aus der ersten Arbeitsleitung (4) ein Stromregler vorgesehen ist.

8. Hydrostatischer Antrieb nach Anspruch 1,
**dadurch gekennzeichnet,**
**dass** zur Entnahme von Druckmittel aus der ersten Arbeitsleitung (4) ein Drosselventil vorgesehen ist.

## Claims

1. Hydrostatic drive having a hydraulic pump (3) which effects delivery into either a first working line (4) or a second working line (5), is driven by a driving engine (2) and is connected, via said first working line (4) and via said second working line (5), to a hydraulic motor (22); and having a pressure line (18) within which a feed pressure throttle (26) is arranged and a feed quantity, which is dependent upon the rotational speed of the driving engine (2), flows,
**characterised in that**,
when, by way of a cause, a differential pressure limit value is exceeded at the feed pressure throttle (26) in the pressure line (18), the pressure medium is removed, by way of an effect, from the first working line (4) into which pressure medium is delivered by the hydraulic motor, which is driven, under overrun conditions, as a pump, so that a partial flow of pressure medium is delivered onwards towards the hydraulic pump (3).

2. Hydrostatic drive according to claim 1,
**characterised in that**,
for the purpose of generating a rotational speed-dependent feed quantity, the pressure line (18) is connected to a feed pump (19) driven by the driving engine (2).

3. Hydrostatic drive according to claim 1,
**characterised in that**,
for the purpose of removing pressure medium from the first working line (4), a high pressure limiting valve (31), which safeguards said first working line (4) against superelevated working pressures, can be brought into an open position.

4. Hydrostatic drive according to one of claims 1 to 3,
**characterised in that**,
for the purpose of opening the high pressure limiting valve (31), said high pressure limiting valve (31) can be connected to the pressure line (18) by means of a differential pressure valve (38).

5. Hydrostatic drive according to claim 4,
**characterised in that**
the first working line (4) and the second working line (5) are safeguarded against excess pressure by the high pressure limiting valve (31) and by a corresponding high pressure limiting valve (31') respectively.

6. Hydrostatic drive according to claim 5,
**characterised in that**
the high pressure limiting valve (31) or the corresponding high pressure limiting valve (31') can be brought into an open position when a differential pressure limit value is exceeded at the feed pressure throttle (26) in the pressure line (18).

7. Hydrostatic drive according to claim 1,
**characterised in that**
a flow-regulator is provided for the purpose of removing pressure medium from the first working line (4).

8. Hydrostatic drive according to claim 1,
**characterised in that**
a throttle valve is provided for the purpose of removing pressure medium from the first working line (4).

## Revendications

1. Dispositif d'entraînement hydrostatique avec une hydropompe (3) convoyant soit dans une première conduite de travail (4) soit dans une deuxième conduite de travail (5), entraînée par une machine d'entraînement (2), qui est reliée par la première conduite de travail (4) et par la deuxième conduite de travail (5) à un hydromoteur (22), et avec une conduite sous pression (18) dans laquelle est disposé un papillon de pression d'alimentation (26) et s'écoule une quantité d'alimentation dépendant du nombre de tours de la machine d'entraînement (2),
**caractérisé en ce que** lors d'un dépassement d'une valeur limite de pression différentielle au papillon de pression d'alimentation (26) dans la conduite sous pression (18) en tant que cause, il est retiré, en tant qu'effet de la première conduite de travail (4) dans laquelle un fluide de pression est convoyé par l'hydromoteur amené à fonctionner comme pompe lors d'un fonctionnement en poussée, le fluide de pression de sorte qu'un flux partiel du fluide de pression est convoyé en direction de l'hydropompe (3).

2. Dispositif d'entraînement hydrostatique selon la revendication 1, **caractérisé en ce que** pour la production d'une quantité d'alimentation dépendant du nombre de tours, la conduite sous pression (18) est reliée à une pompe d'alimentation (19) entraînée par la machine d'entraînement (2).

3. Dispositif d'entraînement hydrostatique selon la revendication 1, **caractérisé en ce que** pour le prélèvement de fluide de pression de la première conduite de travail (4), une vanne de limitation de haute pression (31) sécurisant la première conduite de travail (4) à l'encontre de pressions de travail surélevé peut être amené en une position ouverte.

4. Dispositif d'entraînement hydrostatique selon l'une des revendications 1 à 3, **caractérisé en ce que** pour l'ouverture de la vanne de limitation de haute pression (31), la vanne de limitation de haute pression (31) peut être reliée par une vanne de pression différentielle (38) à la conduite sous pression (18).

5. Dispositif d'entraînement hydrostatique selon la revendication 4, **caractérisé en ce que** la première conduite de travail (4) et la deuxième conduite de travail (5) sont sécurisées par la vanne de limitation de haute pression (31) respectivement par une vanne de haute pression correspondante (31') pour la deuxième conduite de travail (5) à l'encontre d'une surpression.

6. Dispositif d'entraînement hydrostatique selon la revendication 5, **caractérisé en ce que** la vanne de limitation de haute pression (31) respectivement la vanne de limitation de haute pression correspondante (31'), lors du dépassement d'une valeur limite de pression différentielle au papillon de pression d'alimentation (26) dans la conduite sous pression (18) peuvent être amenés dans une position ouverte.

7. Dispositif d'entraînement hydrostatique selon la revendication 1, **caractérisé en ce que** pour le prélèvement de fluide de pression de la première conduite de travail (4), un régulateur d'intensité de courant est prévu.

8. Dispositif d'entraînement hydrostatique selon la revendication 1, **caractérisé en ce que** pour le prélèvement de fluide de pression de la première conduite de travail (4), un papillon est prévu.
